# EUROPÄISCHE PATENTSCHRIFT

(11) **EP 2 483 034 B1**
(45) Veröffentlichungstag und Bekanntmachung des Hinweises auf die Patenterteilung: **14.05.2014**
(21) Anmeldenummer: 10798252.2
(22) Anmeldetag: 27.09.2010
(51) Int. Cl.: B23Q 16/02, B23Q 16/06

(54) **WERKSTÜCKKONSOLE**
WORKPIECE BRACKET
CONSOLE POUR PIÈCES À USINER

(30) Priorität: 02.10.2009 DE 202009013241 U
(43) Veröffentlichungstag der Anmeldung: 08.08.2012
(73) Patentinhaber: Hofmann, Klaus, 85567 Bruck (DE); Kastner, Peter, 82049 Pullach (DE); Seitz, Jürgen, 82049 Pullach (DE)
(72) Erfinder: HOFMANN, Klaus, 85567 Bruck (DE)
(74) Vertreter: Mischung, Ralf
(86) Internationale Anmeldenummer: PCT/DE2010/075098
(87) Internationale Veröffentlichungsnummer: WO 2011/038734

(56) Entgegenhaltungen:
- US-A- 5 643 065
- US-A1- 2004 103 749

## Beschreibung

Die vorliegende Erfindung betrifft eine Werkstückkonsole zur Ausrichtung von Werkstücken, wobei die Werkstückkonsole insbesondere zur Anordnung in Werkzeugmaschinen vorgesehen ist.

Aus dem Stand der Technik ist das Erfordernis bekannt, Werkstücke im Einflussbereich der Werkzeuge eine Werkzeugmaschine so anzuordnen, dass diese bearbeitet werden können. Da die Werkstücke oft von unterschiedlichen Seiten bearbeitet werden müssen ist es erforderlich, diese zwischen bestimmten Arbeitsschritten umzuspannen, so dass die jeweils zu bearbeitende Seite für das Werkzeug zugänglich wird. Dafür sieht der Stand der Technik spezielle Konsolen vor, die mitsamt einem daran befestigten Werkstück um ein vorgebbares Maß verschwenkbar sind, so dass das Werkstück von einer anderen Seite zugänglich wird.

Die Bedienung einer solchen Konsole erfolgt meist manuell, und hinsichtlich Einstellgenauigkeit und möglichst einfacher Handhabung bleiben die aus dem Stand der Technik bekannten Geräte hinter den modernen Anforderungen zurück.

Aus der US 5,643,065 A ist eine Werkstückkonsole für Werkzeugmaschinen bekannt, welche ein um eine Achse drehbares Flanschelement zur lösbaren Montage von Werkstücken umfasst. Allerdings ist die Ausrichtung des Werkstückes damit vergleichsweise umständlich und nur manuell möglich.

Aufgabe der Erfindung ist es daher, eine Werkstückkonsole zur Ausrichtung von Werkstücken in unterschiedlichen räumlichen Positionen anzubieten, die einfach aufgebaut und leicht und sicher zu bedienen ist und dennoch eine hohe Positioniergenauigkeit gewährleistet.

Die Aufgabe wird gelöst durch eine Werkstückkonsole nach Anspruch 1.

Die Werkstückkonsole umfasst erfindungsgemäß ein Flanschelement, an welchem direkt oder indirekt Werkstücke zur Bearbeitung befestigt werden können, wobei dieses Flanschelement vorgebbare Drehwinkelpositionen einnehmen kann. Das Flanschelement ist erfindungsgemäß mit einer Teilscheibe drehfest gekoppelt, die ihrerseits ein Teilungsraster zur Definition der einzelnen Teilschritte bzw. Drehpositionen aufweist. Ein Fixierelement sichert dabei die jeweils gewählte Drehwinkelposition der Teilscheibe bzw. des daran gekoppelten Flanschelements. Die Festlegung der gewünschten Drehwinkelposition erfolgt über ein Stellelement, welches über ein Getriebe mit dem Flanschelement gekoppelt ist, so dass die Drehbewegung des Stellelements auf das Flanschelement übertragen wird.

Durch Drehung des Stellelements um ein vorgebbares Maß wird das Flanschelement entsprechend der gewählten Getriebeübersetzung gedreht. Während dieses Stellvorgangs gibt der erfindungsgemäße Fixiermechanismus die Teilscheibe frei, so dass diese sich zusammen mit dem Flanschelement frei drehen kann. Nach Erreichen der gewünschten Drehwinkelposition kann der Fixiermechanismus so mit der Teilscheibe zusammenwirken, dass diese ihren Drehwinkel behält und damit die an das Flanschelement gekoppelten Werkstücke ihre Drehposition im Raum sicher beibehalten.

Die Erfindung sieht vor, dass der Fixiermechanismus mit Hilfe des Stellelements betätigbar ist. Das Stellelement, mit dem die Drehwinkelposition des Flanschelements eingestellt wird, ist also so ausgebildet, dass es auch die Freigabe bzw. Arretierung der Teilscheibe veranlasst, indem das Stellelement sowohl mit dem Getriebe als auch mit dem Fixiermechanismus zusammenwirkt. Auf diese Weise kann vorteilhaft sichergestellt werden, dass eine Veränderung der Drehwinkelposition der Teilscheibe bzw. des Flanschelements durch Drehen am Stellelement nur dann erfolgen kann, wenn das Stellelement gleichzeitig die Arretierung der Teilscheibe löst. Umgekehrt vermag das Stellelement den Fixiermechanismus auch zur Arretierung der Teilscheibe zu veranlassen, so dass eine Veränderung der Drehwinkelposition ab diesem Zeitpunkt mechanisch verhindert und damit ausgeschlossen ist.

Dem Stellelement werden also erfindungsgemäß zwei Funktionen gleichzeitig zugeordnet, nämlich Einstellen des Drehwinkels und Freigabe/Arretierung der Teilscheibe. Dadurch können Fehlbedienungen der Werkstückkonsole (Veränderung des Drehwinkels bei arretierter Teilscheibe) und daraus folgende Beschädigungen der Werkstückkonsole vorteilhaft vermieden werden.

Die erfindungsgemäße Werkstückkonsole umfasst dabei ein um eine vorzugsweise vertikal verlaufende Achse Z drehbares Stellelement und ein Flanschelement zur lösbaren Montage von Werkstücken oder Werkstückträgern. Das Flanschelement ist dabei um eine zur Z-Achse vorzugsweise rechtwinklig geneigte, vorzugsweise horizontal verlaufende Y-Achse drehbar gelagert und drehfest mit einer Teilscheibe gekoppelt, die ihrerseits ein Teilungsraster aufweist. Das Stellelement ist über ein Getriebe mit dem Flanschelement gekoppelt, so dass eine Drehbewegung des Stellelements auf das Flanschelement übertragbar ist. Ein mit Hilfe des Stellelements betätigbarer Fixiermechanismus kann die Teilscheibe in einer gewählten Drehwinkelposition arretieren bzw. zur Veränderung des Drehwinkels freigeben.

Die erfindungsgemäße Werkstückkonsole sieht vor, dass der Fixiermechanismus durch das Stellelement betätigbar ist, indem dieses in Z-Richtung-vorzugsweise gegen eine Federkraft - aus einer Ruhelage in eine Arbeitslage bzw. entgegengesetzt verschoben wird. Eine Drehbewegung des Stellelements um seine Z-Achse bewirkt dann die Veränderung der Drehwinkelposition des Flanschelements, während die Bewegung in Richtung der Z-Achse den Fixiermechanismus zur Freigabe bzw. Arretierung der Teilscheibe veranlasst.

Der Vorteil dieser Ausführungsform liegt darin, dass die Betätigung der Werkstückkonsole sehr einfach und sicher beispielsweise mit Hilfe eines von einem Werkzeughalter getragenen Betätigungsstiftes möglich ist. Die Drehung des Stellelements erfolgt dabei durch eine insbesondere horizontale Bewegung des Betätigungsstiftes (horizontale X-Y-Ebene), während die Betätigung des Fixiermechanismus durch die vertikale Bewegung des Betätigungsstiftes in Z-Richtung erfolgt. Beide Bewegungen können unabhängig voneinander ablaufen. Bei der erfindungsgemäßen Werkstückkonsole umfasst der Fixiermechanismus eine vorzugsweise federbeaufschlagte Klinke, die in einer Arretierposition mit einem Rastelement in das Teilungsraster der Teilscheibe eingreift, und die nach Auslenkung aus der Arretierposition in eine Freistellposition die Arretierung der Teilscheibe löst. Die Klinke kann insbesondere nach Art eines endseitig gelagerten Hebels ausgebildet sein, dessen gegenüberliegendes freies Ende um ein vorgebbares Maß zwischen zwei Anschlägen verschwenkbar ist, wobei die Anschläge die Arretierposition bzw. die Freistellposition der Klinke definieren. Ein an der Klinke vorgesehenes Rastelement, beispielsweise ein Vorsprung, wirkt in der Arretierposition mit dem Teilungsraster reib- oder insbesondere formschlüssig zusammen.

Eins solche Klinke lässt sich sehr einfach bedienen, beispielsweise mit Hilfe eines die Klinke beaufschlagenden Exzenters. Eine Rotation des Exzenters um beispielsweise 180° könnte die Klinke dabei aus der Arretierposition gegen eine Federkraft in die Freistellposition bewegen, um dadurch die Veränderung der Drehwinkelposition des Flanschelements zu ermöglichen.

Als im Sinne der Erfindung besonders vorteilhaft gewährleistet diese Klinke auch die Möglichkeit, durch das Stellelement mittelbar oder unmittelbar beaufschlagt zu werden, beispielsweise durch einen in Z-Richtung bewegbaren Stößel oder ein anderes Element mit gleicher Funktion. Der Stößel könnte Bestandteil des Stellelements sein oder mit diesem verbunden sein. Dann kann mit Betätigung nur einer Komponente, nämlich dem Stellelement, zunächst die Arretierung der Teilscheibe gelöst werden (Verschiebung des Stellelements in vertikaler Richtung), um anschließend durch Drehen des Stellelements die gewünschte neue Drehwinkelposition anzufahren. Eine permanent aufrecht erhaltene drehfeste Verbindung zwischen Stellelement und Schnecke gewährleistet, dass die Drehposition des Stellelements während der Bearbeitung der Werkstücke unverändert bleibt. Ein am Stellelement vorteilhaft angebrachtes Eingreifmuster zur Bedienung mittels Betätigungsstift (Ausnehmungen 12, siehe dazu weiter unten) behält dann ebenfalls seine Lage definiert bei, so dass die Lage der Ausnehmungen für spätere weitere Betätigungen mittels Betätigungsstift eindeutig und genau anfahrbar bleibt. Zur besonders einfachen Bedienung des Stellelements sieht eine weitere Ausführungsform der Erfindung vor, dass das Stellelement an einer Oberseite regelmäßig auf einem Teilkreis angeordnete, in Z-Richtung nach oben offene Ausnehmungen (Eingreifmuster) aufweist. In diese Ausnehmungen kann ein insbesondere von einem Werkzeughalter gehaltener Betätigungsstift in Z-Richtung von oben eingeführt werden, um dadurch in der X-Y-Ebene eine formschlüssige Verbindung mit dem Stellelement herzustellen. Zur Verdrehung des Stellelements kann der Betätigungsstift dann in einer (vorzugsweise kreisförmigen) Bewegung in der X-Y-Ebene geführt werden, so dass der in das Stellelement eingreifende Stift das Stellelement entsprechend dieser Kreisbewegung um seine Z-Achse dreht.

Eine besondere Ausführungsform der erfindungsgemäßen Werkstückkonsole gewährleistet Dank besonderer Kopplung des Stellelements mit dem Fixiermechanismus, dass eine Veränderung der Drehwinkelposition des Flanschelements bei arretierter Teilscheibe zuverlässig verhindert wird. Eine Betätigung des Getriebes soll also nur dann erfolgen können, wenn die Teilscheibe zur Drehung freigegeben bzw. die Klinke des Fixiermechanismus die Freistellposition eingenommen hat. Daher sieht eine spezielle Ausführungsform der Erfindung vor, dass das Stellelement zur Übertragung seiner Drehbewegung auf das Flanschelement mit einem Getriebeelement lösbar verbindbar ist. Insbesondere könnte das Stellelement eine Keilwellenverbindung aufweisen, die eine drehfeste Verbindung mit einem Schneckenrad herstellen bzw. lösen kann. Zweckmäßigerweise wird die drehfeste Verbindung hergestellt, wenn die Teilscheibe zur Drehung freigegeben wird oder wurde. Andernfalls, also solange die Teilscheibe in ihrer Drehposition arretiert ist, soll eine Übertragung der Drehbewegung des Stellelements auf das Getriebe bzw. ein Getriebeelement zuverlässig unterbleiben.

Diese Aufgabe lässt sich erfindungsgemäß besonders elegant dadurch lösen, dass die drehfeste Verbindung dann hergestellt wird, wenn das Stellelement in Z-Richtung um das Maß verschoben wird, das in diesem Fall gleichzeitig den Fixiermechanismus zur Freigabe der Teilscheibe beaufschlagt. Denkbar ist insbesondere eine Schnecke, welche um die Z-Achse des Stellelements drehbar angeordnet ist, und dessen Achse von einem Wellenabschnitt des Stellelements gebildet wird. Der Wellenabschnitt soll dabei relativ zur Schnecke in Z-Richtung verschieblich sein, so dass je nach Z-Position eine drehfeste Verbindung zwischen Wellenabschnitt und Schnecke hergestellt bzw. gelöst wird.

Damit ergibt sich der erfindungsgemäße Vorteil, dass eine Übertragung der Drehbewegung des Stellelements auf das Getriebe bzw. auf das Flanschelement zuverlässig nur dann möglich ist, wenn die drehfeste Verbindung zwischen Stellelement und Schnecke hergestellt ist. Zugleich kann diese Bewegung des Stellelements in Z-Richtung (zur Herstellung der drehfesten Verbindung) aber erfindungsgemäß auch dazu genutzt werden, die Klinke des Fixiermechanismus zu beaufschlagen, so dass die Arretierung der Teilscheibe gelöst wird. Die Änderung der Drehwinkelposition des Flanschelements kann nach dieser Ausführungsform also nur dann erfolgen, wenn die Teilscheibe tatsächlich nicht arretiert ist. Durch diese Koppelbarkeit des Stellelements mit dem Getriebe einerseits und dem Fixiermechanismus andererseits ist eine unsachgemäße Bedienung der Werkstückkonsole vorteilhaft ausgeschlossen.

Da das Stellelement nach der vorstehenden Variante in der Ruhelage theoretisch frei drehbar ist, könnten die Ausnehmungen des Eingreifmusters an der Oberseite des Stellelements ihre Lage bspw. während einer Werkstückbearbeitung verändern und eine unbestimmte bzw. der Maschine nicht "bekannte" Position einnehmen. Dann könnte der Betätigungsstift später nicht sicher genau in eine Ausnehmung eingeführt werden, was die automatische bzw. maschinelle Bedienung der Werkstückkonsole erschwert. Daher sieht einer weitere Ausführungsvariante des Stellelements vor, dass der mit den Ausnehmungen versehene, das Eingreifmuster enthaltende obere Stellelement-Abschnitt in eine definierte Drehposition um die Z-Achse geführt wird, wenn das Stellelement, ausgehend von der unteren Arbeitslage, in die oberer Ruhelage geführt wird.

Zweckmäßigerweise geschieht diese Positionierung erst dann, wenn bei der Aufwärtsbewegung des Stellelements die drehfeste Verbindung zur Schnecke gelöst wurde. Zur Positionierung käme etwa eine Rasterung im Bereich der Lagerung des Stellelements in Frage, in die ein am Stellelement drehfest angeordnetes Positionierelement bei der Aufwärtsbewegung zwingend eingreift und die dabei das Positionierelement mitsamt dem Stellelement in die definierte Drehposition überführt. Die definierte Drehposition ist dabei vorzugsweise so zu wählen bzw. vorzugeben, dass sie mit der Drehposition des Stellelements unmittelbar nach der Einstellung des Drehwinkels des Flanschelements entweder genau übereinstimmt oder um genau eine oder mehrere Ausnehmungen gegenüber dieser verdreht liegt.

Eine besonders einfache bzw. klare Bedienung der Werkstückkonsole durch das Stellelement ergibt sich dann, wenn einem Teilungsschritt der Ausnehmungen des Stellelements genau ein Teilungsschritt des Teilungsrasters an der Teilscheibe entspricht. Wird das Stellelement in diesem Fall um genau einen Teilungsschritt gedreht (so dass eine Ausnehmung bis in die Position der zuvor unmittelbar benachbarten Position gelangt), so soll auch das Teilungsraster an der Teilscheibe um genau einen Teilschritt weiter gedreht werden. Weist das Stellelement beispielsweise 12 gleichmäßig über den Umfang verteilte Ausnehmungen auf, und umfasst das Teilungsraster an der Teilscheibe 144 einzelne Teilpositionen, so würde eine Verdrehung des Stellelements um 1/12 (also 30°) einer Verdrehung der Teilscheibe bzw. des Flanschelements um 1/144 (also 2,5°) entsprechen. Ein besonders zweckmäßiges Übersetzungsverhältnis zwischen Stellelement und Flanschelement ergibt sich daher bei 12:1. Bei 12 Ausnehmungen im Stellelement und einer Übersetzung von 12:1 sind Drehwinkel des Flanschelements in 2,5°-Schritten möglich. Dadurch können beispielsweise Drehwinkel von 90°, 45° oder auch 22,5° dargestellt werden, was bei Teilungsschritten von 1° an der Teilscheibe nicht möglich wäre.

Wie eingangs erwähnt, eignet sich die Werkstückkonsole zur Ausrichtung von damit verbundenen Werkstücken in unterschiedlichen Drehwinkelpositionen. Um die Werkstücke geeignet befestigen zu können, sieht eine bevorzugte Ausführungsform der erfindungsgemäßen Werkstückkonsole einen Spannbalken vor, der mit dem Flanschelement verbindbar ist. Der Spannbalken dient zur Befestigung von insbesondere mehreren Werkstücken und umfasst mehrere, parallel zur Y-Richtung verlaufende Befestigungsoberflächen, die zueinander einen Winkel, vorzugsweise von 90°, bilden. Auf jeder dieser Oberflächen lassen sich erfindungsgemäß ein oder mehrere Werkstücke befestigen. Durch Drehung des Spannbalkens über den vorstehend beschriebenen, erfindungsgemäßen Mechanismus nehmen die auf jeder Oberfläche des Spannbalkens befestigten Werkstücke jeweils eine neue Bearbeitungsposition ein, um anschließend bearbeitet zu werden.

Weitere vorteilhafte Ausführungsformen ergeben sich aus den Unteransprüchen.

Nachfolgend soll eine erfindungsgemäße Ausführungsform der Erfindung anhand von Figuren näher erläutert werden. Dabei zeigen
- Fig. 1: eine schematische perspektivische Ansicht wesentlicher Komponenten der Werkstückkonsole,
- Fig. 1A: einen vergrößerten Ausschnitt einer Seitenansicht der Teilscheibenarretierung,
- Fig. 2: eine schematische perspektivische Schnittdarstellung einer Werkstückkonsole im Gehäuse und
- Fig. 3: eine Werkstückkonsole mit Spannbalken zur Aufnahme von Werkstücken.

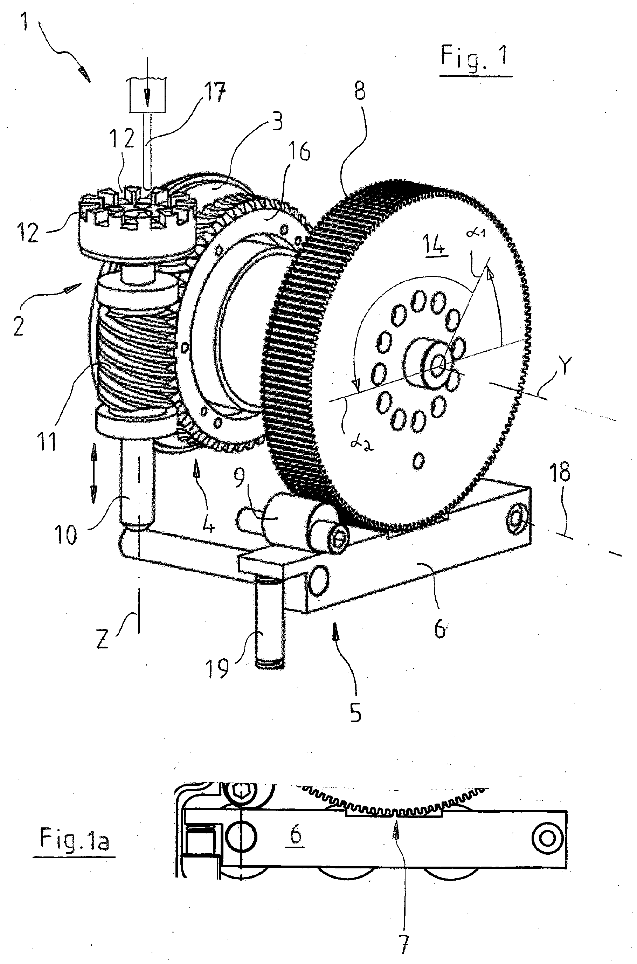

In Fig. 1 ist eine Werkstückkonsole 1 in perspektivischer Teilansicht dargestellt. Auf einer horizontalen Y-Achse sind die Teilscheibe 14, das Schneckenrad 16 und das Flanschelement 3 drehfest miteinander verbunden und um die Y-Achse drehbar gelagert. Das Flanschelement 3 dient zur Befestigung von Werkstücken oder Werkstückträgern, die für unterschiedliche Bearbeitungsschritte in verschiedene, in Fig. 1 nur beispielhaft dargestellte Drehwinkelpositionen α₁, α₂ überführt werden sollen.

Eine Schnecke 11 kämmt mit dem Schneckenrad 16 und wird von einem Stößel 10 zentrisch durchstoßen. Der Stößel 10 ist Teil eines Stellelements 2, welches um eine vertikale Z-Achse drehbar gelagert ist und an seinem oberen Ende mehrere Ausnehmungen 12 aufweist, in die ein schematisch dargestellter Betätigungsstift 17 von oben eingreifen kann. Das Stellelement 2 ist in Z-Richtung verschieblich gelagert, und kann aus einer oberen Ruhelage in eine untere Arbeitslage verschoben werden. Eine dem Stellelement auferlegte Drehbewegung bewirkt (in dieser Variante unabhängig von der Lage des Stellelements 2) über das aus Schnecke 11 und Schneckenrad 16 gebildete Getriebe 4 eine Verdrehung des Flanschelements 3 in Abhängigkeit vom Drehwinkel des Stellelements 2.

Der Stößel 10 des Stellelements 2 beaufschlagt die Klinke 6 eines Fixiermechanismus 5. Die Klinke 6 ist um eine horizontale Achse 18 zwischen einer Arretierposition und einer Freistellposition schwenkbar, wobei der Stößel 10 bei der Abwärtsbewegung des Stellelements 2 aus der Ruhelage in die Arbeitslage die Klinke aus der Arretierposition in die Freistellposition herunterdrückt. Bewegt sich dagegen das Stellelement 2 zurück in die obere Ruhelage, so wird die Klinke 6 über die Feder 19 zurück in die Arretierposition gedrängt.

Fig. 1A zeigt in vergrößerter Teilansicht, wie ein an der Klinke 6 angeordnetes Rastelement 7 in ein an der Teilscheibe 14 angeordnetes Teilraster 8 eingreift, so dass in der Arretierposition eine Verdrehung der Teilscheibe 14 (und damit auch des Flanschelements 3) durch Formschluss vermieden wird.

Ergänzend zu der Betätigung des Fixiermechanismus 5 über das Stellelement 2 kann die Klinke 6 auch über einen Exzenter 9 manuell aus ihrer oberen Arretierposition gegen die Kraft der Feder 19 in die untere Freistellposition bewegt werden.

Die Werkstückkonsole funktioniert folgendermaßen: In der oberen Ruhelage des Stellelements 2 befindet sich die Klinke 6 in der Arretierposition, so dass eine Verdrehung des Flanschelements 3 unmöglich ist.
Soll die Drehwinkelposition des Flanschelements 3 verändert werden, so wird das Stellelement 2 mit Hilfe des Betätigungsstiftes 17, der in eine der Ausnehmungen 12 des Stellelements 2 eingeführt wird, zunächst aus der oberen Ruhelage in die untere Arbeitslage herabgedrückt. Dabei drückt der Stößel 10 die Klinke 6 des Fixiermechanismus 5 aus der Arretierposition in die Freistellposition, so dass das Rastelement 7 außer Eingriff des Teilungsrasters 8 an der Teilscheibe 14 gelangt. Nunmehr wird der Betätigungsstift 17 - nach Maßgabe des gewünschten Drehwinkels -auf einer Kreisbahn um die Z-Achse herumbewegt. Die drehfest mit dem Stellelement 2 verbundene Schnecke 11 bewirkt dann über das Schneckenrad 16 die Verdrehung des Flanschelements 3 im gewünschten Maß, wobei die kleinste wählbare Drehwinkelveränderung in diesem Beispiel einer Weiterbewegung des Teilungsrasters 8 gegenüber dem Rastelement 7 um genau einen Teilschritt entspricht.

Sobald die gewünschte Drehwinkelposition des Flanschelements 3 eingestellt ist, wird der Betätigungsstift 17 in vertikaler Richtung wieder nach oben abgehoben. Dabei bewegt sich das Stellelement 2 aus der Arbeits- in die Ruhelage. Dadurch vermag dadurch die Klinke 6 der Aufwärtsbewegung des Stößels 10 zu folgen, so dass das Rastelement 7 in die neu gewählte Position am Teilungsraster 8 eingreifen und die Teilscheibe 14 drehfest fixieren kann. In einer zuvor beschriebenen Variante könnte während der Bewegungen in die Arbeits- bzw. Ruhelage auch eine drehfeste Verbindung zwischen Stellelement 2 und Schnecke 11 hergestellt bzw. gelöst werden.

Der erfindungsgemäße Mechanismus verhindert zuverlässig eine Verdrehung des Flanschelements 3 durch die fixierte Teilscheibe 14.

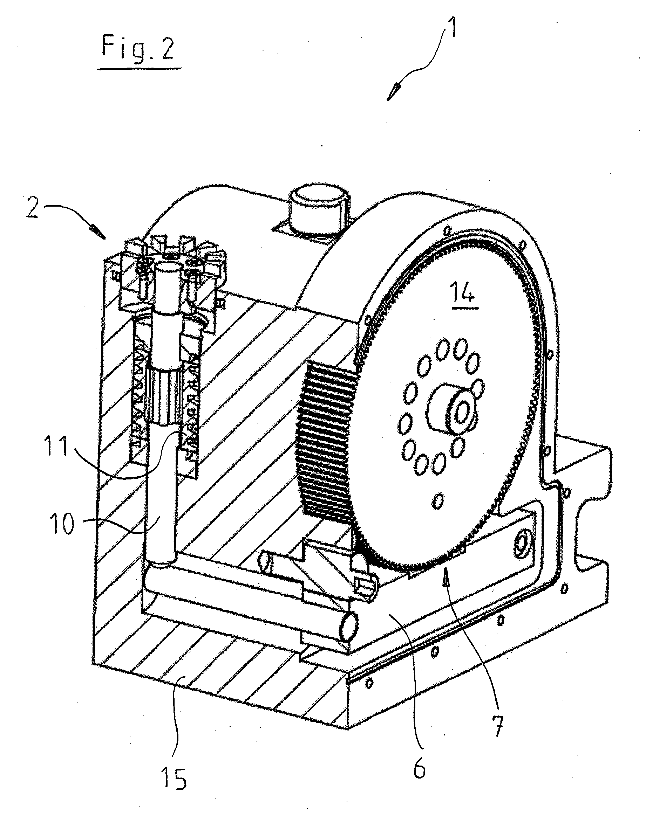

Fig. 2 zeigt die Komponenten gemäß Fig. 1 angeordnet in einem freigeschnittenen Gehäuse 15. Etwas besser zu erkennen ist hier die Keilwellenverbindung zwischen der Schnecke 11 und dem Stellelement 2, die in diesem Fall unabhängig von der Z-Position des Stellelements 2 stets eine drehfeste Verbindung zur Schnecke 11 bietet.

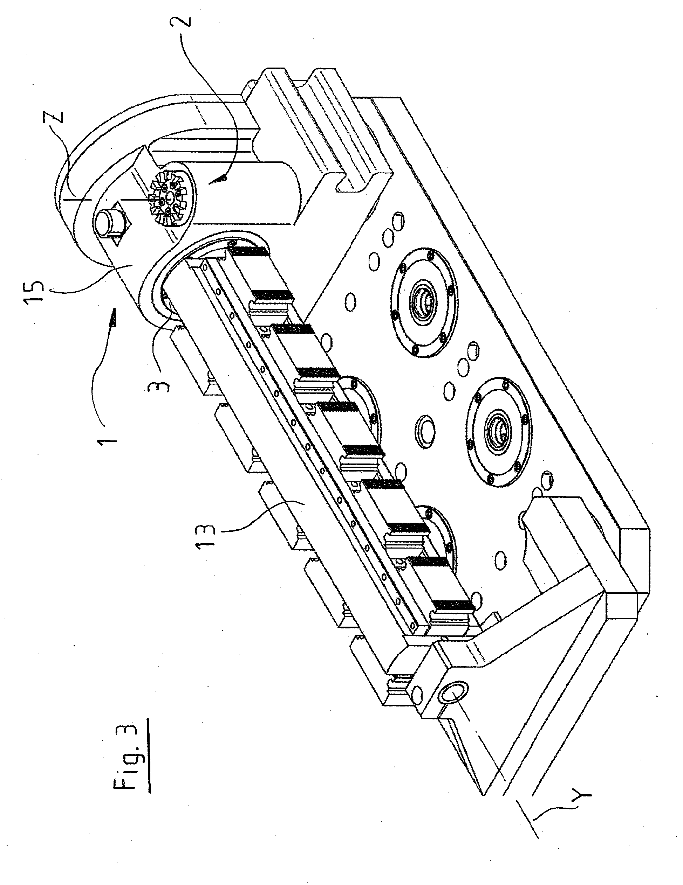

Fig. 3 zeigt einen Anwendungsfall der erfindungsgemäßen Werkstückkonsole 1. Die Konsole 1 ist auf einem Maschinenbett einer Werkzeugmaschine angeordnet, wobei die Konsole vorteilhaft über ein nicht näher beschriebenes Nullspannsystem am Maschinenbett fixiert ist. Am Flanschelement 3 ist ein Spannbalken 13 angeordnet, der sich in Y-Richtung erstreckt und gemeinsam mit dem Flanschelement 3 um die Y-Achse drehen lässt. An dem der Werkstückkonsole gegenüberliegenden Ende des Spannbalkens 13 ist dieser gelagert. Mehrere Werkstücke lassen sich auf unterschiedlichen Seiten des Spannbalkens 13 befestigen und dort bearbeiten. Nach erfolgter Bearbeitung der Werkstücke in einer zunächst gewählten Drehwinkelposition des Flanschelements 3 lässt sich die Drehwinkelposition nach dem zuvor beschriebenen Verfahren über das Stellelement 2 verändern, so dass die Werkstücke nun eine andere Ausrichtung im Raum einnehmen, um anschließend weiter bearbeitet zu werden.

## Patentansprüche

1. Werkstückkonsole (1), insbesondere für Werkzeugmaschinen,
a) mit einem um eine vorzugsweise vertikal verlaufende Achse (Z) drehbaren Stellelement (2), und
b) mit einem Flanschelement (3) zur lösbaren Montage von Werkstücken oder Werkstückträgern, wobei das Flanschelement (3) um eine zur Z-Achse vorzugsweise rechtwinklig geneigte, vorzugsweise horizontale verlaufende Y-Achse drehbar gelagert ist,
c) wobei das Stellelement (2) über ein Getriebe (4) mit dem Flanschelement (3) gekoppelt ist, um eine Drehbewegung des Stellelements (2) auf das Flanschelement (3) zu übertragen, und
d) wobei eine ein Teilungsraster (8) aufweisende Teilscheibe (14) drehfest mit dem Flanschelement (3) gekoppelt ist
**dadurch gekennzeichnet, dass**
e) ein Fixiermechanismus (5) vorgesehen ist, um damit die Teilscheibe (14) in einer mittels Stellelement (2) einstellbaren Drehwinkelposition lösbar zu arretieren, wobei
f) der Fixiermechanismus (5) mit dem Stellelement (2) betätigbar ist, indem dieses in Z-Richtung aus einer Ruhelage in eine Arbeitslage bzw. entgegengesetzt verschoben wird und dabei mittelbar oder unmittelbar eine Klinke (6) des Fixiermechanismus (5) beaufschlagt, die in einer Arretierposition mit einem Rastelement (7) arretierend in das Teilungsraster (8) der Teilscheibe (14) eingreift.

2. Werkstückkonsole nach Anspruch 1, **dadurch gekennzeichnet, dass** die Klinke (6) federbeaufschlagt ist und nach Auslenkung aus der Arretierposition in eine Freistellposition die Arretierung der Teilscheibe (14) löst

3. Werkstückkonsole nach dem vorhergehenden Anspruch, **dadurch gekennzeichnet, dass** die Klinke (6) über einen manuell bedienbaren Exzenter (9) und/oder einen mit dem Stellelement (2) verbundenen Stößel (10) zwischen Arretier- und Freistellposition bewegbar ist.

4. Werkstückkonsole nach einem der vorigen Ansprüche, **dadurch gekennzeichnet, dass** das Stellelement (2) zur Übertragung seiner Drehbewegung auf das Flanschelement drehfest, insbesondere mittels Keilwellenverbindung, mit einem Getriebeelement (11), insbesondere einer Schnecke (11), verbunden oder verbindbar ist.

5. Werkstückkonsole nach Anspruch 4, **dadurch gekennzeichnet, dass** die drehfeste Verbindung durch Bewegung des Stelleelements (2) in die Arbeitslage herstellbar und durch Bewegung in die Ruhelage lösbar ist.

6. Werkstückkonsole nach einem der vorigen Ansprüche, **dadurch gekennzeichnet, dass** Führungsmittel vorgesehen sind, um das Stellelement (2) bei der Einnahme der Ruhelage in eine von vorzugsweise mehreren, durch die Führungsmittel definierten Drehpositionen überführen.

7. Werkstückkonsole nach einem der vorigen Ansprüche, **dadurch gekennzeichnet, dass** das Stellelement (2) regelmäßig auf einem Teilkreis angeordnete, in Z-Richtung nach oben offene Ausnehmungen (12) aufweist, um zur Betätigung des Stelleelements (2) einen vorzugsweise von einem Werkzeughalter einer Werkzeugmaschine gehaltenen Betätigungsstift (17) in eine der Ausnehmungen (12) aufzunehmen.

8. Werkstückkonsole nach dem vorhergehenden Anspruch, bei der die Getriebeübersetzung so gewählt ist, dass einem Teilungsschritt der Ausnehmungen (12) des Stellelements (2) genau einem Teilungsschritt des Teilungsrasters (8) entspricht.

9. Werkstückkonsole nach einem der vorigen Ansprüche, **dadurch gekennzeichnet, dass** die Getriebeuntersetzung vom Stellelement (2) zum Flanschelement (3) 12:1 ist.

10. Werkstückkonsole nach einem der vorigen Ansprüche, **dadurch gekennzeichnet, dass** ein Spannbalken (13) zur Verbindung mit dem Flanschelement (3) vorgesehen ist, wobei der Spannbalken (13) zur Befestigung von Werkstücken mehrere, parallel zur Y-Richtung verlaufende Befestigungsoberflächen aufweist, die zueinander einen Winkel, vorzugsweise von 90°, bilden.

## Claims

1. A workpiece bracket (1), in particular for machine tools,
a) having an adjusting element (2) which is rotatable about an axis (Z) preferably extending vertically, and
b) having a flange element (3) for releasable mounting of workpieces or workpiece-carriers, wherein the flange element (3) is rotatably mounted about a Y-axis which is preferably inclined at right angles to the Z-axis and preferably extends horizontally,
c) wherein the adjusting element (2) is coupled to the flange element (3) by way of a gear unit (4) in order to transmit a rotational movement of the adjusting element (2) to the flange element (3), and
d) wherein a graduated disc (14), which has a division grid (8), is coupled to the flange element (3) in a secure manner with respect to rotation,
**characterised in that**
e) a fixing mechanism (5) is provided in order to arrest the graduated disc (14) therewith in a releasable manner in a rotational-angle position which can be adjusted by means of adjusting element (2), wherein
f) the fixing mechanism (5) can be actuated with the adjusting element (2) **in that** the adjusting element (2) is shifted in the Z-direction out of a rest position into a working position or *vice versa* and in so doing acts indirectly or directly upon a pawl (6) of the fixing mechanism (5) which in an arresting position with a latching element (7) engages in an arresting manner in the division grid (8) of the graduated disc (14).

2. A workpiece bracket according to claim 1, **characterised in that** the pawl (6) is spring-loaded, and after deflection out of the arresting position into a freeing position releases the arrest of the graduated disc (14).

3. A workpiece bracket according to the preceding claim, **characterised in that** the pawl (6) can be moved between the arresting and freeing position by way of a manually operable cam (9) and/or a plunger (10) connected to the adjusting element (2).

4. A workpiece bracket according to one of the previous claims, **characterised in that** the adjusting element (2), in order to transmit its rotational movement to the flange element, is connected to or can be connected to a gear-unit element (11), in particular to a screw (11), in a secure manner with respect to rotation, in particular by means of a splined-shaft connection.

5. A workpiece bracket according to claim 4, **characterised in that** the rotationally secure connection can be established by movement of the adjusting element (2) into the working position and can be released by movement into the rest position.

6. A workpiece bracket according to one of the previous claims, **characterised in that** guiding means are provided in order to transfer the adjusting element (2), when taking up the rest position, into one of preferably several rotational positions defined by the guiding means.

7. A workpiece bracket according to one of the previous claims, **characterised in that** the adjusting element (2) has recesses (12) arranged regularly on a graduated circle and open upwards in the Z-direction in order, for actuation of the adjusting element (2), to receive an actuating pin (17), preferably held by a tool-holder of a machine tool, in one of the recesses (12).

8. A workpiece bracket according to the preceding claim, in which the gear ratio is chosen so that one increment of the recesses (12) of the adjusting element (2) corresponds exactly to one increment of the division grid (8).

9. A workpiece bracket according to one of the previous claims, **characterised in that** the gear ratio from the adjusting element (2) to the flange element (3) is 12:1.

10. A workpiece bracket according to one of the previous claims, **characterised in that** a clamping beam (13) is provided for connection to the flange element (3), wherein the clamping beam (13) has, for the securement of workpieces, a plurality of securing surfaces extending parallel to the Y-direction and forming an angle, relative to one another, preferably of 90°.

## Revendications

1. Console à outils (1), plus particulièrement pour des machines-outils,
a) avec un élément de réglage (2) rotatif autour d'un axe de préférence vertical (Z), et
b) avec un élément de bridage (3) pour le montage amovible de pièces à usiner ou de porte-outils, l'élément de bridage (3) étant logé de manière rotative autour d'un axe Y, de préférence horizontal, incliné de préférence à angle droit par rapport à l'axe Z,
c) l'élément de réglage (2) étant couplé à l'élément de bridage (3) par l'intermédiaire d'un engrenage (4), afin de transmettre un mouvement rotatif de l'élément de réglage (2) à l'élément de bridage (3), et
d) un plateau diviseur (14), présentant une grille de division (8), étant couplée de manière solidaire en rotation avec l'élément de bridage (3),
**caractérisée en ce que**
e) un mécanisme de fixation (5) est prévu pour bloquer de manière amovible le plateau diviseur (14) dans une position angulaire de rotation réglable à l'aide d'un élément de réglage (2),
f) le mécanisme de fixation (5) pouvant être actionné avec l'élément de réglage (2) en déplaçant celui-ci dans une direction Z d'une position de repos vers une position de travail ou inversement et en actionnant directement ou indirectement un cliquet (6) du mécanisme de fixation (5), qui s'encliquète, dans une position de blocage, avec un élément d'encliquetage (7) qui se bloque dans la grille de division (8) du plateau diviseur (14).

2. Console à outils selon la revendication 1, **caractérisée en ce que** le cliquet (6) est contraint par un ressort et, après le passage de la position de blocage vers une position de déblocage, débloque le plateau diviseur (14).

3. Console à outils selon la revendication précédente, **caractérisée en ce que** le cliquet (6) peut être déplacé à l'aide d'un excentrique (9) contrôlable manuellement et/ou d'un poussoir (10) relié à l'élément de réglage (2) entre une position de blocage et une position de déblocage.

4. Console à outils selon l'une des revendications précédentes, **caractérisée en ce que** l'élément de réglage (2) est relié ou peut être relié de manière solidaire en rotation, plus particulièrement à l'aide d'une liaison par arbre cannelé, avec un élément d'engrenage (11), plus particulièrement une vis sans fin (11), afin de permettre la transmission de son mouvement rotatif à l'élément de bridage.

5. Console à outils selon la revendication 4, **caractérisée en ce que** la liaison solidaire en rotation peut être établie par le mouvement de l'élément de réglage (2) vers la position de travail et peut être supprimée par le mouvement de ce même élément vers la position de repos.

6. Console à outils selon l'une des revendications précédentes, **caractérisée en ce que** des moyens de guidage sont prévus afin d'amener l'élément de réglage (2), lors de la mise en position de repos, vers une position de rotation parmi, de préférence, plusieurs positions de rotation définies par les moyens de guidage.

7. Console à outils selon l'une des revendications précédentes, **caractérisée en ce que** l'élément de réglage (2) comprend des évidements (12) ouverts vers le haut dans la direction Z, réparties régulièrement sur un cercle divisé, afin de loger, dans un des évidements (12), pour l'actionnement de l'élément de réglage (2), une tige d'actionnement (17) maintenue de préférence par un support d'outil d'une machine-outil.

8. Console à outils selon la revendication précédente, dans laquelle le facteur de multiplication est choisi de façon à ce qu'une graduation des évidements (12) de l'élément de réglage (2) corresponde exactement à une graduation de la grille de division (8).

9. Console à outils selon l'une des revendications précédentes, **caractérisée en ce que** le facteur de démultiplication entre l'élément de réglage (2) et l'élément de bridage (3) est de 12:1.

10. Console à outils selon l'une des revendications précédentes, **caractérisée en ce qu'**une barre de serrage (13) est prévue pour la liaison avec l'élément de bridage (3), la barre de serrage (13) comprenant, pour la fixation de pièces à usiner, plusieurs surfaces de fixation parallèles à la direction Y, qui forment entre elles un angle, de préférence de 90°.
